# EUROPEAN PATENT APPLICATION

(11) **EP 1 750 248 A2**
(43) Date of publication of application: **07.02.2007**
(21) Application number: 06118446.1
(22) Date of filing: 04.08.2006
(51) Int. Cl.: G09G 3/34

(54) **Backlight unit, display apparatus comprising the same and control method thereof**

(30) Priority: 05.08.2005 KR 20050071937
(71) Applicant: Samsung Electronics Co., Ltd., Yeongtong-gu Suwon-si, Gyeonggi-do (KR)
(72) Inventor: Kim, Young-kook, Suwon-si Gyeonggi-do (KR)
(74) Representative: Read, Matthew Charles

(57) **Abstract**

A display apparatus comprises a liquid crystal display (LCD) panel (20), a light source unit (40) including a plurality of point light sources, such as LEDs (42), to provide light to the LCD panel (20), divided into a plurality of light source areas (41 a, 41b, 41c), a plurality of light source driving parts (26, 27, 28) to supply electric power to the plurality of light source areas (41a, 41b, 41c), a brightness sensor (45) for sensing a brightness of the light source unit (40), and a light source controller for controlling one or more light source driving parts (26, 27, 28) based on the brightnesses sensed by the brightness sensor (45). The light source controller controls the electric power supplied to one or more light source areas (41 a, 41b, 41c) so that the light source unit (40) provides light of uniform brightness.

## Description

The invention relates to a backlight unit, a display apparatus comprising the same, and a control method therefor.

Recently, a flat display device, such as a liquid crystal display (LCD), a plasma display panel (PDP) and an organic light emitting diode (OLED), has been developed as an alternative to a cathode ray tube (CRT).

A LCD comprises a LCD panel that comprises a thin film transistor (TFT) substrate, a colour filter substrate, and liquid crystals interposed between both substrates. The LCD panel does not emit light itself. Instead, a backlight unit is provided to the rear of the TFT substrate to provide light. Transmittance of the light irradiated from the backlight unit is adjusted in accordance with the alignment of the liquid crystals. The LCD panel and the backlight unit are accommodated in a chassis.

The backlight unit can be an edge type backlight unit or a direct type backlight unit, according to a position of a light source.

In an edge type backlight unit, a light source is installed on one side of a light guiding plate. The edge type backlight unit is typically used with small LCD devices, such as a monitor for a laptop computer or a monitor for a desktop computer. The edge type backlight unit has various advantages, such as high uniformity of light and long life. Furthermore, a LCD that uses an edge type backlight unit may be made relatively thin.

The direct type backlight unit has been developed alongside the development of a large-screen LCD. In a direct type backlight unit, a plurality of light sources are disposed under the LCD panel and directly emit light to the surface of the LCD panel. The direct type backlight unit makes greater use of the available light sources than the edge type backlight unit. Therefore, the direct type backlight unit obtains a higher brightness; however, the brightness is not uniform.

In a conventional backlight unit, where an entire light source is driven by one driving part, the entire light source should be replaced with a new one when the brightness is not uniform. However, it costs a lot of money to replace the light source with a new one and the above-mentioned problem may arise repeatedly.

It is an object of the present invention to provide a backlight unit, a display apparatus comprising the same, and a control method therefor for adjusting brightness and color temperature of light source units.

According to a first aspect of the invention, a backlight unit comprises a light source unit comprising a plurality of point light sources and divided into a plurality of light source areas, a plurality of light source driving parts to supply electric power to corresponding ones of the plurality of light source areas, a brightness sensor to sense a brightness of the light source unit and a light source controller to control the light source driving part based on the brightness sensed by the brightness sensor.

In this manner, the light source unit can be controlled to provide light of uniform brightness.

The brightness sensor may sense an actual brightness of each of the plurality of light source areas.

The backlight unit may further comprise a brightness calculator to calculate an average brightness using each actual brightness of the plurality of light source areas sensed by the brightness sensor and to calculate a difference between the average brightness and each actual brightness of the plurality of light source areas.

The light source controller may control the light source driving part to supply additional electric power to one or more of the plurality of light source areas when the difference between the average brightness and an actual brightness of the one or more of the plurality of light source areas is out of a predetermined permissible range.

The plurality of point light sources may emit light having a red colour, a green colour and a blue colour, respectively.

The plurality of light source driving parts may supply electric power in accordance with the emitted colours of the point light sources.

According to a second aspect of the invention, a backlight unit for providing light to a display device comprises a light source unit comprising a plurality of light source areas, a plurality of brightness sensors located on corresponding ones of the plurality of light source areas, arranged to determine an actual brightness of each of the plurality of light source areas, and a power supply control unit arranged to control an amount of power supplied to each of the light source areas, based on the determined actual brightness.

Each of the plurality of light source areas may comprise at least one of the plurality of brightness sensors and at least one of the plurality of light sources. Each of the plurality of light source areas may comprise a single brightness sensor and two or more light sources. Each of the plurality of brightness sensors may comprise a converting unit to convert light data corresponding to the actual brightness of each of the plurality of light source areas into an electric signal. Each of the plurality of brightness sensors may be located in a middle of corresponding ones of the plurality of light source areas. The power supply control unit may comprise a plurality of driving parts to drive corresponding ones of the plurality of light source areas, a brightness calculator, to determine an average brightness of the light source unit and to calculate differences between the average brightness and each actual brightness of the plurality of light source areas, and a controller to receive brightness data from the brightness calculator relating to the differences and to control the plurality of driving parts based on the brightness data.

Each of the plurality of light source areas may comprise at least one of the plurality of brightness sensors and at least one of the plurality of light sources. Each of the plurality of light source areas may comprise a single brightness sensor and two or more light sources. Each of the plurality of brightness sensors may comprise a converting unit to convert light data corresponding to the actual brightness of each of the plurality of light source areas into an electric signal. Each of the plurality of brightness sensors may be located in a middle of corresponding ones of the plurality of light source areas. The power supply control unit may comprise a plurality of driving parts to drive corresponding ones of the plurality of light source areas, a brightness calculator, to determine an average brightness of the light source unit and to calculate differences between the average brightness and each actual brightness of the plurality of light source areas, and a controller to receive brightness data from the brightness calculator relating to the differences and to control the plurality of driving parts based on the brightness data.

This aspect also provides a method of controlling a display apparatus including a display device, a light source unit comprising a plurality of point light sources arranged to provide light to the display device and divided into a plurality of light source areas, a plurality of light source driving parts to supply electric power to corresponding ones of the plurality of light source areas, and a brightness sensor to sense a brightness of the light source unit, comprises sensing an actual brightness of each of the plurality of light source areas and supplying light of uniform brightness based on the sensed actual brightness.

The method may further comprise calculating an average brightness of the plurality of light source areas and calculating a difference between the average brightness and the actual brightnesses of the light source areas.

The supply of the light may include supplying additional electric power to one or more of the plurality of light source areas where the difference between the average brightness and an actual brightness of the one or more of the plurality of light source areas is outside a predetermined permissible range.

The invention also provides a display apparatus comprising a display device and a backlight unit arranged to provide illumination for said display device according to said first or second aspect. The display device may be a liquid crystal panel.

According to a third aspect of the invention, a method of controlling a backlight unit including a light source unit comprising first and second light source areas, first and second pluralities of light sources located on the first and second light source areas respectively, and first and second brightness sensors located on the first and second light source areas respectively and arranged to determine an actual brightness of the first and second light source areas, comprises determining an average brightness of the light source unit, calculating a difference between the average brightness and the actual brightness of the first light source area, and controlling a supply of electric power to the first light source area based on first brightness data corresponding to the difference between the average brightness and the actual brightness of the first light source area.

The method may further comprise increasing an amount of electric power supplied to the first light source area when the difference between the average brightness and the actual brightness of the first light source area is outside a predetermined range of values and maintaining an amount of electric power supplied to the first light source area when the difference between the average brightness and the actual brightness of the first light source area is within a predetermined range of values, inclusive of end values of the range.

The method may further comprise calculating a difference between the average brightness and the actual brightness of the second light source area, and controlling a supply of electric power to the second light source area based on second brightness data corresponding to the difference between the average brightness and the actual brightness of the second light source area.

Example embodiments of the present invention will now be described, with reference to with the accompanying drawings, of which:
FIG. 1 is an exploded perspective view illustrating a display apparatus according to an embodiment of the present invention.
FIG. 2 is a control block diagram illustrating a backlight unit of the display apparatus in FIG. 1.
FIG. 3 is a flow chart illustrating a control method of the display apparatus of FIG. 1.

In the following detailed description, like reference numerals refer to like elements throughout. Moreover, a point light source will be described using a light emitting diode (LED) as an example. However, the present invention is not limited to arrangements in which the point light source is an LED. The invention could be implemented in an arrangement comprising other point light sources.

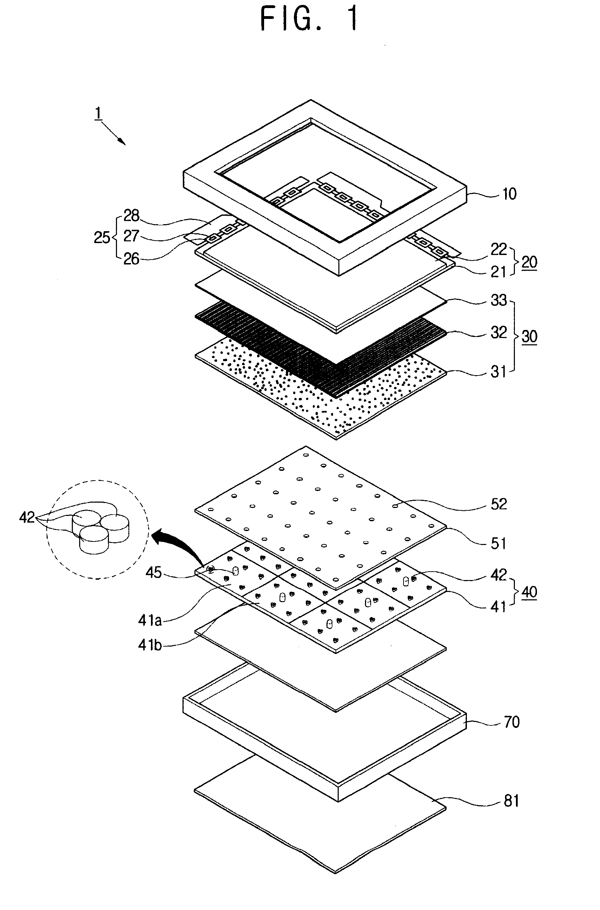

As illustrated in FIG. 1, a display apparatus 1 according to an embodiment of the present invention comprises a LCD panel 20, a light control member 30, and a light source unit 40, which are disposed to the rear of the LCD panel 20. The light source unit 40 is disposed to the rear of the light control member 30 and may comprise an LED 42 and an LED board 41 on which the LED 42 is located.

The LCD panel 20, the light control member 30, and the LED circuit board 41 may be housed between an upper cover 10 and a lower cover 70.

The LCD panel 20 comprises a TFT substrate 21 where TFTs are formed, a colour filter substrate 22 which faces the TFT substrate 21, a sealant (not illustrated) that fixes the substrates 21 and 22 together and forming a cell gap, and a liquid crystal layer (not illustrated) disposed between the substrate 21, the substrate 22, and the sealant. As illustrated in FIG. 1, the LCD panel 20 has a rectangular shape, having a long side and a short side. However, the present invention is not limited to arrangements in which the LCD panel 20 has a rectangular shape.

The LCD panel 20 adjusts an alignment of the liquid crystal within the liquid crystal layer to form an image. However, the LCD panel 20 does not, itself, emit light. Thus, the LED 42 is disposed to the rear of the LCD panel 20 for providing light to the LCD panel 20. A driving part 25 can be provided at one side of the TFT substrate 21 to provide a driving signal. In this particular example, the driving part 25 comprises a flexible printed circuit (FPC) 26, a driving chip 27 mounted on the FPC 26 and a printed circuit board (PCB) 28 connected to one side of the FPC 26. The driving part 25 illustrated in FIG. 1 is a chip on film (COF) type driving part. However, any suitable driving part type, such as tape carrier package (TCP), chip on glass (COG), or the like, can be used as the driving part. Also, the driving part 25 may be formed on the TFT substrate 21, forming a wire line.

In this particular example, the light control member 30 disposed to the rear of the LCD panel 20 comprises a diffusion plate 31, a prism film 32 and a protection film 33.

The diffusion plate 31 may comprise a base plate and a coating layer having beads formed on the base plate. The diffusion plate 31 diffuses light from the LED 42, thereby improving brightness uniformity.

The prism film 32 may comprise triangular prisms formed in a predetermined alignment thereon. The prism film 32 concentrates the light diffused by the diffusion plate 31 so that it is directed perpendicularly to a surface of the LCD panel 20. Two prism films 32 can be used and micro prisms formed on each of the prism films 32 make a predetermined angle with each other. The light passing through the prism film 32 is directed perpendicularly to the LCD panel 20, that is, in a vertical direction in FIG. 1, thereby forming a uniform brightness distribution. A reflective polarizing film may be used along with the prism film 32. Alternatively, a reflective polarizing film may be used without the prism film 32.

The LED board 41 can be disposed across the rear of the LCD panel 20 and may be divided into a plurality of light source areas 41a and 41b, each of which comprises a plurality of LEDs 42.

For example, in some embodiments of the present invention, the light source unit 40 may be divided into nine light source areas, each of the light source areas comprising six LEDs 42 and one brightness sensor 45. Each of the light source areas can be provided with electric power from a separate light source driving part (not illustrated). The light source driving part and a light source controller for controlling the light source driving part may be provided at the rear of the LED board 41.

The LEDs 42 may comprise a red LED 42, a green LED 42 and a blue LED 42, and the light emitted by the LEDs 42 may be mixed to provide white light to the LCD panel 20. However, the present invention is not limited to the arrangement of the LEDs 42 illustrated in FIG. 1. For example, a white LED 42 may be provided instead of the red, the green and the blue LEDs 42.

The brightness sensor 45 can be disposed at a location that is about the centre of the light source area. The brightness sensor 45 senses a brightness of light emitted from the LED 42. The overall brightness and colour temperature of the light source unit 40 can be adjusted by dividing the light source unit 40 into a plurality of areas, in which case information on brightnesses of the respective light source areas is needed. Accordingly, brightness sensors 45 can be disposed in each of the light source areas, thereby providing information on each light source area to the light source controller. The information transmitted from the brightness sensor 45 can be used as data for calculating an average brightness of the LCD panel 20.

The brightness sensor 45 may comprise a circuitry element comprising a light-receiving diode and have a mechanism that converts received light into an electrical signal, such as an electric current.

A reflecting plate 51 may be provided on a portion of the LED board 41 where LEDs 42 are not located. LED through holes 52 can be provided in the reflecting plate 51 to correspond with the arrangement of the LEDs 42, so that the LEDs 42 are accommodated in the LED through holes 52. The reflecting plate 51 reflects light that is incident downward towards the diffusion plate 31. The reflecting plate 51 may comprise polyethylene terephthalate (PET) or polycarbonate (PC). Furthermore, the reflecting plate 51 is formed so that it is thick enough to avoid shrinkage due to heat generated by the LEDs 42.

A thermal conductive sheet 81 is attached to an external surface of the lower cover 70. The thermal conductive sheet 81 can be disposed parallel to the LED board 41, and radiates the heat generated by the LEDs 42 away from the display apparatus 1. The thermal conductive sheet 81 has different thermal conductivities, along its surface direction and its thickness direction. The thermal conductivity of the thermal conductive sheet 81 in the surface direction may be about 100W/mK higher than its thermal conductivity in the thickness direction.

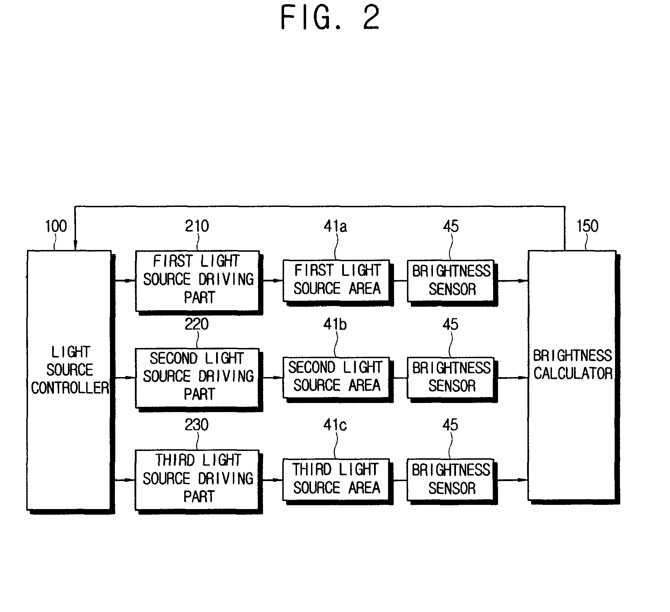

As illustrated in FIGS. 1 and 2, a backlight unit according to an embodiment of the present invention may comprise a plurality of light source areas 41a, 41b, 41c, each comprising LEDs 42, a plurality of light source driving parts 210, 220, 230 for providing electric power to corresponding ones of the plurality of light source areas 41a, 41b, 41c, a plurality of brightness sensors 45 for sensing a brightness in corresponding ones of the plurality of light source areas 41a, 41b, 41c, a brightness calculator 150 for calculating an average brightness and a light source controller 100 for controlling the backlight unit.

The brightness calculator 150 calculates an average brightness of the light source areas 41a, 41b, 41c based on an actual brightness of the light source areas 41a, 41b, 41c as sensed by the brightness sensor 45. In addition, the brightness calculator 150 calculates differences between the average brightness and the actual brightness of each respective light source area 41a, 41b, 41c, and provides the differences to the light source controller 100. In other words, the brightness sensor 45 senses the actual brightness of each of the light source areas 41a, 41b, 41c, the brightness calculator 150 determines which area of brightness is different from the average brightness, calculates the difference, and processes the difference into a data that the light controller 100 can use. An algorithm for calculating an average brightness and a variation of brightness can be formulated using conventional logic, and thus is omitted in this description.

The brightness calculator 150 and the light source controller 100 may be provided together in a single chip. For instance, the brightness calculator 150 may be comprised in logics of the light source controller 100.

The plurality of light source driving parts 210, 220, 230 supply electric power to the corresponding light source areas 41a, 41b, 41c independently, according to the colours of LED 42, i.e. according to the red, blue, and green LEDs 42 located in the light source areas 41a, 41b, 41c. The amount of electric power supplied to the respective LEDs 42 is controlled by the light source controller 100.
LEDs 42 emitting the same colour are connected to each other in series. The light source driving parts 210, 220, 230 may comprise switching elements to provide electric power to the LEDs 42 and comparators to adjust the amount of electric power provided to the LEDs 42. When the light source driving parts 210, 220, 230 receive a control signal from the light source controller 100 regarding the amount of electric power to be supplied, the light source driving parts 210, 220, 230 adjust a duty ratio of their respective switching elements, thereby adjusting the supply amount of electric power. Thus, the light source unit 40 can be divided into a plurality of light areas and the light source controller 100 can adjust the LEDs 42 according to their colours, so as to control the respective light areas independently.

The light source controller 100 controls the light source driving parts 210, 220, 230 based on data received from the brightness calculator 150, relating to an average brightness and the variation of brightness in the light source areas 41a, 41b, 41c so that the light source unit 40 provides light of uniform brightness. The light source controller 100 controls the light source driving parts 210, 220, 230 to supply additional electric power to one or more of the light source areas 41a, 41b, 41c where the brightness is low, that is, where a difference between the average brightness of the light areas and an actual brightness of one or more of the respective light source areas 41a, 41b, and 41c is outside a predetermined permissible range. That is, the light source controller 100 adjusts the light source driving parts 210, 220, 230 independently so as to supply electric power to one or more light source areas 41a, 41b, 41c where the brightness is less than the average brightness. The electric power adjusted by the light source driving parts 210, 220, 230 may be the electric current that is supplied to the LED 42.

In various embodiments of the present invention, an external apparatus, such as a computer, may re-apply the control signal to the backlight unit based on the brightness information. In such an embodiment, the computer is connected to the display apparatus 1 through a communication line allowing the transmission and/or reception of the control signal between the computer and the display apparatus 1. A user may adjust the control signal as desired.

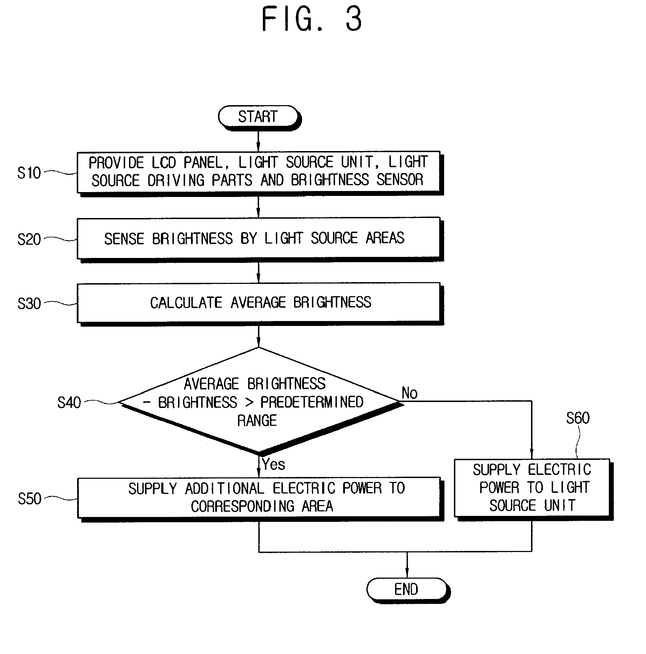

A control method for operating the display apparatus of FIG. 1 will now be described, with reference to the flowchart of FIG. 3.

Referring to FIGS. 1-3, the LCD panel 20, the light source unit 40 comprising the plurality of LEDs 42 and divided into the plurality of light source areas 41 a, 41b, 41c, the plurality of light source driving parts 210, 220, 230 to supply electric power to the plurality of light source areas 41a, 41b, 41c independently and the brightness sensor 45 to sense the brightness of the light source unit 40 are provided, at operation S10.

Then, the brightness sensor 45 senses the brightness of the respective light source areas 41a, 41b, 41c at operation S20. The brightness sensed by the brightness sensor 45 is input to the brightness calculator 150. The brightness calculator 150 calculates an average brightness of the light source areas 41a, 41b, 41c at operation S30. Thereafter, the brightness calculator 150 calculates the differences between the average brightness and the actual brightness of each light source area 41a, 41b, 41c and provides the differences to the light source controller 100.

The light source controller 100 determines whether the differences between the average brightness and each actual brightness of the light source areas 41 a, 41b, 41c are outside the predetermined permissible range at operation S40.

If one or more differences are outside the predetermined permissible range, additional electric power is provided to the corresponding area of the light source area 41a, 41b, 41c at operation S50. Since each actual brightness of the light source areas 41a, 41b, and 41c may decrease as the display apparatus 1 is used, the respective brightness of each of the light source areas 41 a, 41b, 41c may be less than the average brightness value. Accordingly, the light source controller 100 can apply a control signal to increase the amount of electric power supplied to the light source driving parts 210, 220, 230, so that the light source driving parts 210, 220, 230 can supply additional electric power to the relevant light source areas 41a, 41 b, 41 c. Moreover, if one or more differences are within the predetermined permissible range, the light source driving parts 210, 220, 230 supply normal electric power to the corresponding light source area 41a, 41b, 41c of the light source unit 40 at operation S60.

A display apparatus 1, such as a LCD, may undergo changes regarding the brightness of its light source and colour temperature and the light source may have, or develop, non-uniformity in the brightness of the light source as it is used, thereby decreasing the quality of images displayed on the LCD panel 20. Thus, in various embodiments of the present invention, the light source unit 40 is divided into a plurality of areas to independently sense a brightness of each of the areas and to compare each sensed brightness with an average brightness, thereby independently improving brightness and uniformity.

Although a few embodiments of the present invention have been shown and described, it will be appreciated by those skilled in the art that changes may be made in these embodiments without departing from the the scope of the present invention, which is defined in the appended claims.

## Claims

1. A backlight unit, comprising:
a light source unit (40) comprising a plurality of point light sources (42) and divided into a plurality of light source areas (41a, 41 b, 41c);
a plurality of light source driving parts (26, 27, 28) arranged to supply electric power to corresponding ones of the plurality of light source areas (41a, 41b, 41 c);
a brightness sensor (45) arranged to sense a brightness of the light source unit (40); and
a light source controller (100) configured to control the light source driving parts (26, 27, 28) based on the brightness sensed by the brightness sensor (45).

2. A backlight unit according to claim 1, wherein the brightness sensor (45) senses an actual brightness of each of the plurality of light source areas (41a, 41b, 41c).

3. A backlight unit according to claim 2, comprising:
a brightness calculator (150) configured to calculate an average brightness of the light source unit (40) based on the actual brightness of each light source area (41a, 41b, 41c) and to calculate a difference between the average brightness and the actual brightness of the each light source area (41a, 41b, 41c).

4. A backlight unit according to claim 3, wherein the light source controller (100) controls the light source driving parts (26, 27, 28) to supply additional electric power to one or more of the plurality of light source areas (41a, 41b, 41c) if the difference between the average brightness and the actual brightness of the one or more of the plurality of light source areas (41a, 41b, 41c) is outside a predetermined permissible range.

5. A backlight unit according to any one of the preceding claims, wherein the plurality of point light sources (42) emits light having a red colour, a green colour and a blue colour, respectively.

6. A backlight unit for providing light to a display device (20), comprising:
a light source unit (40) comprising a plurality of light source areas (41a, 41 b, 41c);
a plurality of brightness sensors (45) located on corresponding ones of the plurality of light source areas (41a, 41b, 41c), arranged to determine an actual brightness of each of the plurality of light source areas (41a, 41b, 41c); and
a power supply control unit (25, 100) arranged to control an amount of power supplied to each of the light source areas (41a, 41b, 41c) independently, based on the determined actual brightness.

7. A backlight unit according to claim 6, wherein each of the plurality of light source areas (41a, 41b, 41c) comprises:
at least one of the plurality of brightness sensors (45); and
at least one of a plurality of light sources (42).

8. A backlight unit according to claim 6, wherein each of the plurality of light source areas comprises:
a single brightness sensor (45); and
two or more light sources (42).

9. A backlight unit according to claim 6, 7 or 8, wherein:
each of the plurality of brightness sensors (45) comprises a converting unit to convert light data corresponding to the actual brightness of each of the plurality of light source areas (41a, 41b, 41c) into an electric signal.

10. A backlight unit according to claim 6 or 8, wherein:
each of the plurality of brightness sensors (45) is located at a centre of the corresponding light source area (41a, 41 b, 41c).

11. A backlighting unit according to any one of claims 6 to 10, wherein the power supply control unit (25, 100) comprises:
a plurality of driving parts (26, 27, 28) arranged to drive corresponding ones of the plurality of light source areas (41a, 41b, 41c);
a brightness calculator (150) configured to determine an average brightness of the light source unit (40) and to calculate differences between the average brightness and the actual brightness of each of the plurality of light source areas (41a, 41 b, 41c); and
a controller (100) configured to receive brightness data from the brightness calculator (150) corresponding to the differences and to control the plurality of driving parts (26, 27, 28) based on the brightness data.

12. A display apparatus, comprising:
a display device (20); and
a backlight unit according to any one of the preceding claims, arranged to provide illumination for said display device (20).

13. A display apparatus according to claim 12, wherein said display device (20) is a liquid crystal display panel.

14. A method of controlling a display apparatus including a display device (20), a light source unit (40) comprising a plurality of point light sources (42) arranged to provide light to the display device (20) and divided into a plurality of light source areas (41a, 41 b, 41c), a plurality of light source driving parts (26, 27, 28) to supply electric power to corresponding ones of the plurality of light source areas (41a, 41b, 41c), and a brightness sensor (45) to sense a brightness of the light source unit (40); comprising:
sensing an actual brightness of each of the plurality of light source areas (41a, 41b, 41c); and
supplying light of uniform brightness based on the sensed actual brightness.

15. A method according to claim 14, comprising:
calculating an average brightness using the actual brightness of each of the plurality of light source areas (41a, 41b, 41c); and
calculating a difference between the average brightness and the actual brightness of each of the plurality of light source areas (41a, 41b, 41c).

16. The control method according to claim 14 or 15, wherein:
the supply of light of uniform brightness comprises supplying additional electric power to one or more of the plurality of light source areas (41a, 41b, 41c) where the difference between the average brightness and the actual brightness of said one or more of the plurality of light source areas (41a, 41b, 41c) is outside a predetermined permissible range.

17. A method of controlling a backlight unit comprising a light source unit (40) comprising first and second light source areas (41a, 41b), first and second pluralities of light sources (42) located in the first and second light source areas (41a, 41b) respectively, and first and second brightness sensors (45) located in the first and second light source areas respectively and arranged to determine an actual brightness of the first and second light source areas (41a, 41b), the method comprising:
determining an average brightness of the light source unit (40);
calculating a difference between the average brightness and the actual brightness of the first light source area (41a); and
controlling a supply of electric power to the first light source area (41a) based on first brightness data in accordance with the difference between the average brightness and the actual brightness of the first light source area (41a).

18. The method according to claim 17, further comprising:
increasing an amount of electric power supplied to the first light source area when the difference between the average brightness and the actual brightness of the first light source area is outside of a predetermined range of values; and
maintaining an amount of electric power supplied to the first light source area when the difference between the average brightness and the actual brightness of the first light source area is within a predetermined range of values, inclusive of end values of the range.

19. A method according to claim 20, comprising:
calculating a difference between the average brightness and the actual brightness of the second light source area (41b); and
controlling a supply of electric power to the second light source area (41b) based on second brightness data corresponding to the difference between the average brightness and the actual brightness of the second light source area (41b).
